# EUROPEAN PATENT APPLICATION

(11) **EP 4 546 508 A1**
(43) Date of publication of application: **30.04.2025**
(21) Application number: 24817459.1
(22) Date of filing: 23.07.2024
(51) Int. Cl.: H01M 10/643, H01M 10/6557, H01M 10/6568, H01M 10/625

(54) **LIQUID COOLING SYSTEM AND BATTERY BOX USING SAME**

(30) Priority: 12.09.2023 CN 202322476717 U
(71) Applicant: Eve Energy Co., Ltd., Huizhou Guangdong 516000 (CN)
(72) Inventor: ZHAO, Yuhang, Huizhou, Guangdong 516000 (CN); JIANG, Jibing, Huizhou, Guangdong 516000 (CN); LIU, Huajun, Huizhou, Guangdong 516000 (CN); WANG, Yuanyuan, Huizhou, Guangdong 516000 (CN)
(74) Representative: Petraz, Gilberto Luigi
(86) International application number: PCT/CN2024/106979
(87) International publication number: WO 2025/055558

(57) **Abstract**

The present application relates to the technical field of batteries. Specifically, disclosed are a liquid cooling system and a battery case applied therewith. The liquid cooling system includes: a plurality of liquid cooling plates arranged in sequence, each of the plurality of liquid cooling plates including an end seat and a heat dissipation part, and the end seat being provided with an inlet port tube and an outlet port tube in communication with the heat dissipation part; and a plurality of connecting tubes, configured to be connected to adjacent inlet port tubes and adjacent outlet port tubes, enabling the plurality of liquid cooling plates to be connected in parallel. An inlet main port and an outlet main port are respectively provided on two outermost end seats, the inlet main port is configured to be in communication with the inlet port tube to input cooling liquid into the heat dissipation part, and the outlet main port is configured to be in communication with the outlet port tubes to discharge the cooling liquid from the heat dissipation part.

## Description

The present application claims the priority of Chinese Patent Application No. 2023224767170 filed on September 12, 2023 before CNIPA. All the above are hereby incorporated by reference in their entirety.

### TECHNICAL FIELD

The present application relates to the technical field of batteries, and in particular, to a liquid cooling system and a battery case applied therewith.

### BACKGROUND

The mainstream types of cells in a related art include cylindrical cells, square cells and pouch cells. Among them, the cylindrical cells have higher energy density and better safety and stability, and the production cost of the cylindrical cells is also lower, so that the cylindrical cells are widely popularized in electric vehicles.

A battery case of the cylindrical cells is mainly using a serpentine tube liquid cooling plate to be in contact with sides of the cells for thermal management. The serpentine tube liquid cooling plate has a large contact area with the cells and has high cooling efficiency, and at the same time, a pressure drop of the liquid cooling system applied with the serpentine tube liquid cooling plate is small.

### TECHNICAL PROBLEM

Since the structure of the serpentine tube liquid cooling plate is too compact, the design of the connection of the liquid cooling system is difficult, so that it is difficult to ensure the reliability. In the related technologies, the nylon tube expansion connection is mostly used for the connection, which leads to low grouping efficiency and relatively poor reliability.

### TECHNICAL SOLUTION

In a first aspect, provided is a liquid cooling system, including:
a plurality of liquid cooling plates arranged in sequence, in which each of the plurality of liquid cooling plates includes an end seat and a heat dissipation part, and the end seat is provided with an inlet port tube and an outlet port tube which are in communication with the heat dissipation part; and
a plurality of connecting tubes, configured to be connected to adjacent inlet port tubes and adjacent outlet port tubes respectively, so as to enable the plurality of liquid cooling plates to be connected in parallel.

An inlet main port and an outlet main port are respectively provided on two outermost end seats, the inlet main port is configured to be in communication with the inlet port tube to input cooling liquid into the heat dissipation part, and the outlet main port is configured to be in communication with the outlet port tubes to discharge the cooling liquid from the heat dissipation part.

In a second aspect, provided is a battery case, which is applied with the above liquid cooling system.

### BENEFICIAL EFFECT

By providing a plurality of connecting tubes to connect adjacent inlet port tubes and outlet port tubes, the plurality of liquid cooling plates are connected in parallel, and an inlet port and an outlet port are respectively provided on two outermost end seats, so as to be in communication with the inlet port tube for inputting cooling liquid to the heat dissipation part and to be in communication with the outlet port tube for discharging cooling liquid from the heat dissipation part, which realizes a fully parallel connection between the plurality of liquid cooling plates, ensures the reliability of connection between the plurality of liquid cooling plates, and reduces the flow resistance of the liquid cooling system and improves the uniformity of the liquid cooling flow, thereby making the liquid cooling system have a better liquid cooling effect.

### BRIEF DESCRIPTION OF THE DRAWINGS

Fig. 1 is a schematic diagram of a liquid cooling system according to an embodiment of the present application;
Fig. 2 is an exploded view of the liquid cooling system according to the embodiment of the present application;
Fig. 3 is an enlarged view at area A in Fig. 2;
Fig. 4 is a schematic diagram of a connecting tube of the liquid cooling system according to the embodiment of the present application; and
Fig. 5 is an application diagram of the liquid cooling system according to the embodiment of the present application.

The meanings of the attached markings are as follows:
1 liquid cooling plate, 11 end seat, 111 inlet port tube, 112 outlet port tube, 12 heat dissipation part, 13 inlet main port, 14 outlet main port, 2 connecting tube, 21 internal thread, 3 battery.

### DETAILED DESCRIPTION

### First embodiment

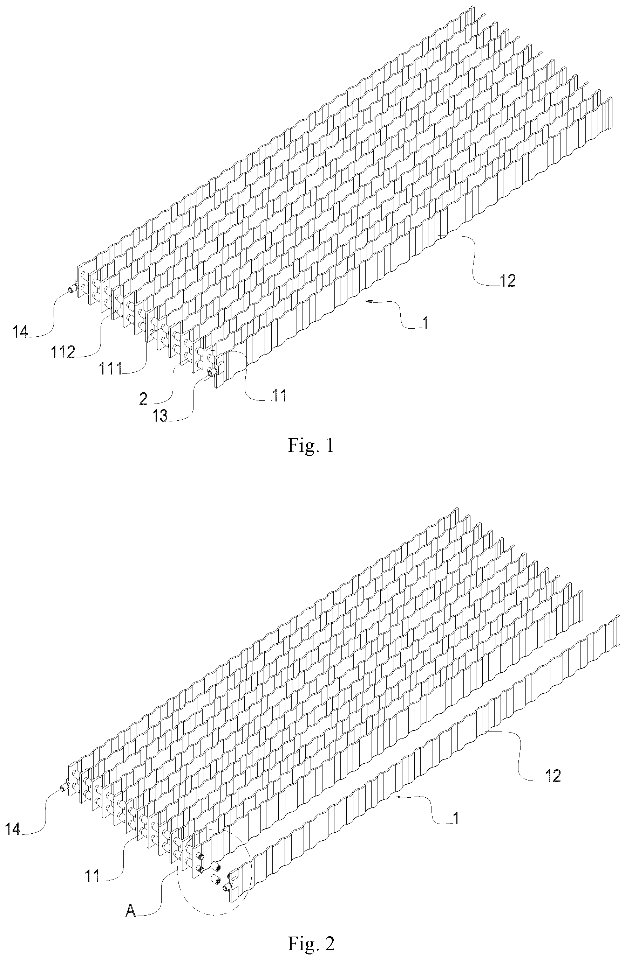

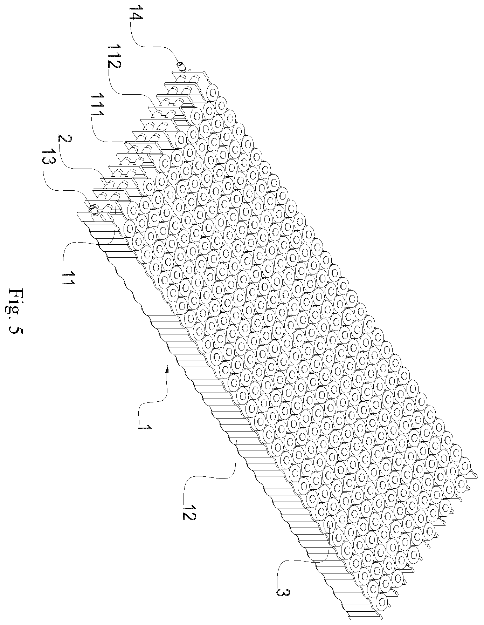

According to Figs. 1 to 5, provided in an embodiment of the present application is a liquid cooling system, including:
a plurality of liquid cooling plates 1 arranged in sequence, in which each of the plurality of liquid cooling plates 1 includes an end seat 11 and a heat dissipation part 12, and the end seat 11 is provided with both an inlet port tube 111 and an outlet port tube 112 which are in communication with the heat dissipation part 12; and a plurality of connecting tubes 2, configured to be connected to adjacent inlet port tubes 111 and adjacent outlet port tubes 112, enabling the plurality of liquid cooling plates 1 to be connected in parallel. An inlet main port 13 and an outlet main port 14 are respectively provided on two outermost end seats 11,the inlet main port 13 is configured to be in communication with the inlet port tube 111 to input cooling liquid into the heat dissipation part 12, and the outlet main port 14 is configured to be in communication with the outlet port tube 112 to discharge the cooling liquid from the heat dissipation part 12.

With the above arrangement, a full parallel connection between the liquid cooling plates 1 is realized, which not only ensures the reliability of the connection between the liquid cooling plates 1, but also reduces the flow resistance of the liquid cooling system and improves the uniformity of the liquid cooling flow rate, so that the liquid cooling system have a better liquid cooling effect.

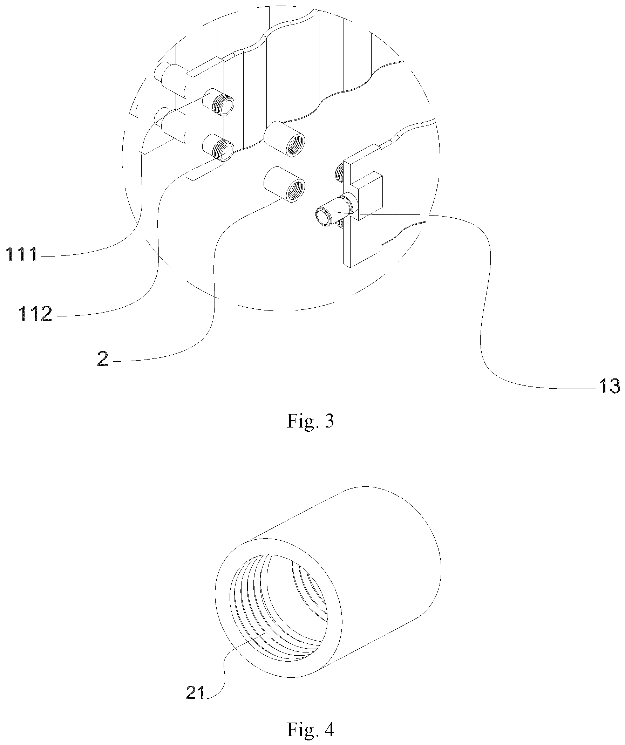

According to Figs. 3 to 4, specifically, an inner wall of each of the plurality of connecting tubes 2 is provided with internal threads 21, an outer wall of the inlet port tube 111 is provided with a first external thread, and the plurality of connecting tubes 2 are connected to the adjacent inlet port tubes 111 by engaging the internal threads 21 with first external threads of the adjacent inlet port tubes 111, thereby strengthening the connection strength between the plurality of connecting tubes 2 and the adjacent inlet port tubes 111, and enhancing the reliability of the connection between the plurality of liquid cooling plates 1. More specifically, the internal threads 21 are respectively provided on two ends of the inner wall of each of the plurality of connecting tubes 2, and accordingly, the first external thread is provided on an end of the outer wall of the inlet port tube 111, so that, under the premise of ensuring the reliability of the connection, threading parts of the each of connecting tubes 2 and the inlet port tube 111 are reduced, thereby reducing the cost and time of processing.

In some implementations, an outer wall of the outlet port tubes 112 is provided with a second external thread, and the plurality of connecting tubes 2 are connected to the adjacent outlet port tubes 112 by engaging the internal threads 21 with second external threads of the adjacent outlet port tubes 112, thereby strengthening the connection strength between the connecting tubes 2 and the outlet port tubes 112, and enhancing the reliability of the connection between the plurality of liquid cooling plates 1. In other implementations, the internal threads 21 are respectively provided on two ends of the inner wall of each of the plurality of connecting tubes 2, and accordingly, the second external thread is provided on an end of the outer wall of the outlet port tube 112, so that, under the premise of ensuring the reliability of the connection, threading part of the outlet port tube 112 is reduced, thereby reducing the cost and time of processing.

In some implementations, a liquid cooling channel in a semi-annular shape is formed inside the heat dissipation part 12, and two ends of the liquid cooling channel are connected to the inlet port tube 111 and the outlet port tube 12 respectively, so that the cooling liquid flows fully through the inside of the heat dissipation part 12, thereby providing a better cooling effect for the heat dissipation part 12. In some implementations, the liquid cooling channel is arranged along an extension direction of the heat dissipation part 12.

Since there are tolerances in the production of the cells and the assembly of the liquid cooling system, the plurality of connecting tubes 2 are provided as a thermally fused tube, and the plurality of connecting tubes 2 are deformable by thermally fusing, so as to be attached with the inlet port tube 111 and/or the outlet port tube 112. Therefore, the plurality of liquid cooling plates 1 are attached with the cells 3 between the plurality of liquid cooling plates 1 completely, which compensates gaps generated by the tolerances, improves the compactness of the overall structure of the liquid cooling system, and realizes effects of ensuring the reliability of the connection of the plurality of liquid cooling plates 1 and reducing the overall volume of the liquid cooling system. In an actual assembly, an inner diameter of each of the plurality of connecting tubes 2 are greater than or equal to an outer diameter of the inlet port tube 111, and is greater than or equal to an outer diameter of the outlet port tube 112. Firstly, connecting tubes 2 of the plurality of connecting tubes 2 are socketed onto the inlet port tube 111 and the outlet port tube 112 on one of adjacent end seats 11, then the inlet port tube 111 and the outlet port tube 112 on the other of the adjacent end seats 11 are aligned with the above inlet port tube 111 and the above outlet port tube 112 socketed the with the connecting tubes 2, and finally, the connecting tubes 2 are moved to the middle of two inlet port tubes 111 on the adjacent end seats 11 and the middle of two outlet port tubes 112 on the adjacent end seats 11, and are thermally fused. Thereby, one of the connecting tubes 2 is thermally fused to the two inlet port tubes 111, and another of the connecting tubes 2 is thermally fused to the two outlet port tubes 112.

In some implementations, the plurality of liquid cooling plates 1 are equally spaced apart from each other, so that mounting spaces for placing cells are formed between the plurality of liquid cooling plates 1. When the cells 3 are cylindrical cells, a projection of the heat dissipation part 12 in a horizontal plane is wavy, so as to allow a side of the heat dissipation part 12 to be attached with the cells 3, thereby strengthening the compactness of the internal structure of the liquid cooling system, which not only enhances the effect of the cooling, but also reduces the overall volume of the liquid cooling system.

In some implementations, the inlet port tube 111 is higher than the outlet port tube 112 in a gravity direction, so as to allow the cooling liquid to flow through the heat dissipation part 12 from top to bottom, which utilizes gravity to reduce the flow resistance of the liquid cooling system, and realizes a better liquid cooling effect.

The following is an exemplary description of a working procedure of the above liquid cooling system of the embodiment:

The cooling liquid flows sequentially into each inlet port tube 111 through the inlet main port 13, flows through the interior of the heat dissipation part 12 along the liquid cooling channel under the effect of gravity, and then flows to the outlet main port 14 through each outlet port tube 112 to be discharged, thereby completing cooling for one time. In actual use, the above process is repeated to cool the cells 3 for multiple times.

### Second embodiment

Based on the same concept, further disclosed in the present application a battery case, which is applied with a liquid cooling system as described above.

It should be noted that the various embodiments in the present specification are described in a progressive manner. Each embodiment focuses on the differences with other embodiments. It is sufficient to refer to each embodiment for the same and similar parts.

## Claims

1. A liquid cooling system, comprising:
a plurality of liquid cooling plates (1) arranged in sequence, wherein each of the plurality of liquid cooling plates (1) comprises an end seat (11) and a heat dissipation part (12), and the end seat (11) is provided with both an inlet port tube (111) and an outlet port tube (112) which are in communication with the heat dissipation part (12); and
a plurality of connecting tubes (2), configured to be connected to adjacent inlet port tubes (111) and adjacent outlet port tubes (112), enabling the plurality of liquid cooling plates (1) to be connected in parallel,
wherein an inlet main port (13) and an outlet main port (14) are respectively provided on two outermost end seats (11), the inlet main port (13) is configured to be in communication with the inlet port tube (111) to input cooling liquid into the heat dissipation part (12), and the outlet main port (14) is configured to be in communication with the outlet port tubes (112) to discharge the cooling liquid from the heat dissipation part (12).

2. The liquid cooling system according to claim 1, wherein an inner wall of each of the plurality of connecting tubes (2) is provided with internal threads (21), an outer wall of the inlet port tube (111) is provided with a first external thread, and the plurality of connecting tubes (2) are connected to the adjacent inlet port tubes (111) by engaging the internal threads (21) with the first external threads of the adjacent inlet port tubes (111).

3. The liquid cooling system according to claim 2, wherein the internal threads (21) are provided on two ends of the inner wall of each of the plurality of connecting tubes (2), and/or, the first external thread is provided on an end of the outer wall of the inlet port tube (111).

4. The liquid cooling system according to claim 2, wherein an outer wall of the outlet port tubes (112) is provided with a second external thread, and the plurality of connecting tubes (2) are connected to the adjacent outlet port tubes (112) by engaging the internal threads (21) with second external threads of the adjacent outlet port tubes (111).

5. The liquid cooling system according to claim 4, wherein the internal threads (21) are provided on two ends of the inner wall of each of the plurality of connecting tubes (2), and/or, the second external thread is provided on an end of the outer wall of the inlet port tube (111).

6. The liquid cooling system according to any one of claims 1 to 5, wherein a liquid cooling channel in a semi-annular shape is formed inside the heat dissipation part (12), and two ends of the liquid cooling channel are connected to the inlet port tube (111) and the outlet port tube (112) respectively.

7. The liquid cooling system according to any one of claims 1 to 5, wherein at least one of the plurality of connecting tubes (2) are provided as a thermally fused tube, and each of the at least one connecting tubes (2) is deformable by thermally fusing, so as to be attached with the inlet port tube (111) and/or the outlet port tube (112).

8. The liquid cooling system according to any one of claims 1 to 5, wherein the plurality of liquid cooling plates (1) are equally spaced apart from each other, so that mounting spaces for placing cells are formed between the plurality of liquid cooling plates (1).

9. The liquid cooling system according to any one of claims 1 to 5, wherein the inlet port tube (111) is higher than the outlet port tube (112) in a gravity direction, so as to allow the cooling liquid to flow through the heat dissipation part (12) from top to bottom.

10. A battery case, applied with the liquid cooling system as claimed in any one of claims 1 to 9.
